# EUROPEAN PATENT APPLICATION

(11) **EP 1 507 258 A2**
(43) Date of publication of application: **16.02.2005**
(21) Application number: 04015902.2
(22) Date of filing: 06.07.2004
(51) Int. Cl.: G11B 15/60, G11B 15/67

(54) **Magnetic tape drive**

(30) Priority: 13.08.2003 JP 2003292925
(71) Applicant: Fuji Photo Film Co., Ltd., Kanagawa (JP)
(72) Inventor: Nakao, Toru c/o Fuji Photo Film Co., Ltd., Odawara-shi Kanagawa (JP); Asai, Masahiko c/o Fuji Photo Film Co., Ltd., Odawara-shi Kanagawa (JP)
(74) Representative: Klunker . Schmitt-Nilson . Hirsch

(57) **Abstract**

A magnetic tape drive (A) is equipped with a travel device (11a, 11b, and 12) for running a magnetic tape (MT) and a plurality of guides for guiding the magnetic tape, which is running, along a predetermined route. Each of the guides has a roller portion and a flange portion. A surface hardening treatment is dispensed to a guide out of the guides where a ratio of a peripheral speed of the guide for a running speed of the magnetic tape is not more than 0.9.

## Description

### BACKGROUND OF THE INVENTION

### 1. FIELD OF THE INVENTION

The present invention relates to a magnetic tape drive for recording/reproducing magnetic information for a magnetic tape.

### 2. DESCRIPTION OF THE RELATED ART

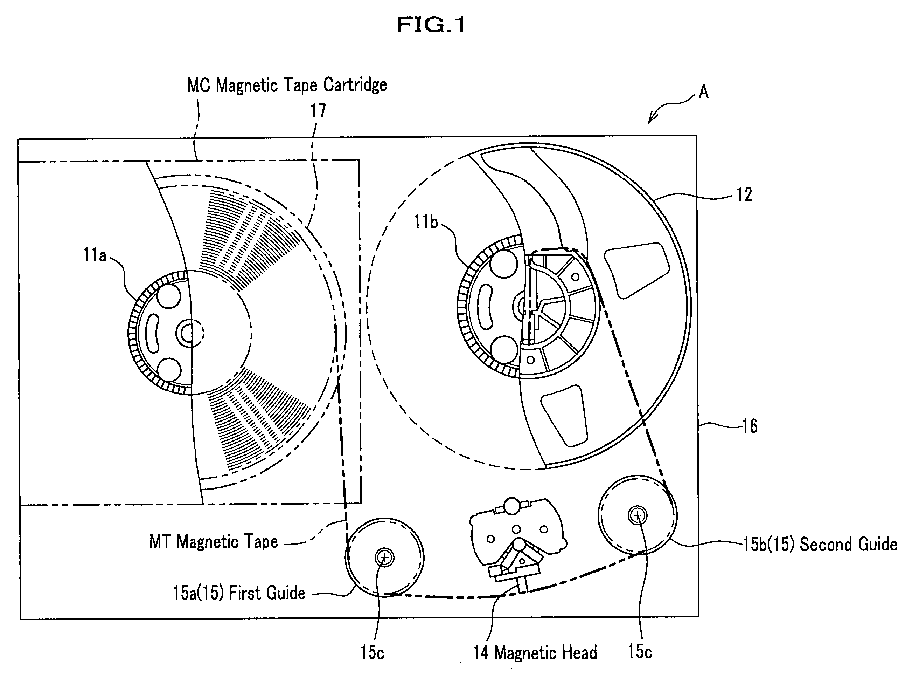

A magnetic tape drive is equipped with a travel device for running a magnetic tape and a plurality of guides for guiding the magnetic tape, which runs, along a predetermined route (for example, see paraphrase 0058 and FIG. 1 in Japanese Patent Laid-Open Publication 2002-530791). In this magnetic tape drive a running magnetic tape is designed to be hung across a plurality of guides arranged at predetermined positions. And each of these guides is configured, as well known, of a roller portion of a cylindrical shape freely rotationally supported by a shaft around a center axis and a flange portion arranged on up/down ends of each roller.

In such the magnetic tape drive, it is designed so that magnetic information is sent to a magnetic head while a magnetic tape, which is received on a periphery of the roller portion, is regulated in a lateral directional movement thereof by the flange portion; thereby the magnetic information is recorded on the magnetic tape; and the recorded magnetic information is reproduced.

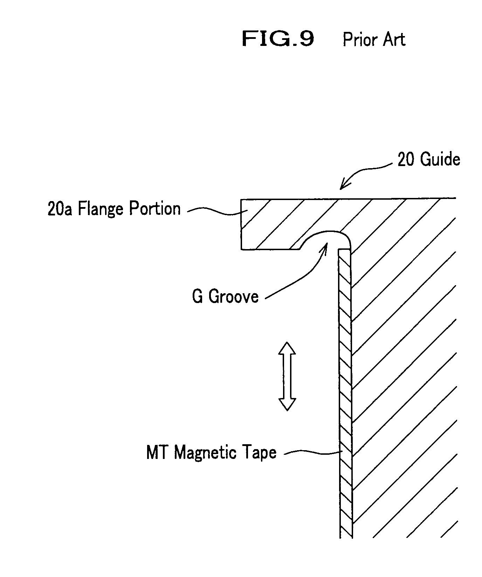

In the meantime, because if such the magnetic tape drive is used for an inspection of magnetic characteristics of the magnetic tape and a library equipping many magnetic cartridges where magnetic information data is stored, the magnetic tape loaded on the magnetic tape drive is in no use or nearly in no use, the guides are remarkably abraded away by a large grinding force of the magnetic tape. In short, for example, as shown in FIG. 9, a groove G is dug into a flange portion 20a of a guide 20 where an edge of a magnetic tape MT abrades as use times of a magnetic tape drive are repeated. This tendency noticeably appears in a magnetic tape drive where a running speed of a magnetic tape is heightened and magnetic information is recorded/reproduced at a high speed. And such the groove G being dug, the magnetic tape MT guided by the guide 20 is oscillated in lateral directions (in up/down directions in FIG. 9) by the groove G in order of a micro meter (µm).

On the other hand, nowadays a track width tends to be narrowed in order to achieve a high density recording of a magnetic tape. As a result, when a magnetic tape drive is used, the above oscillation of the magnetic tape becomes a cause of a tracking error even if an oscillation width thereof is in order of the micro meter.

Consequently, is strongly requested a magnetic tape drive, which does not generate the tracking error, not depending on recording density of a magnetic tape even if used over a long period.

### SUMMARY OF THE INVENTION

The inventor has found that when in each of a plurality of guides arranged at a magnetic tape drive a ratio of a peripheral speed of each guide for a running speed of a magnetic tape becomes lower than a predetermined value, a flange portion of the guide is peculiarly ground by the magnetic tape, and thereby has reached the present invention.

A first aspect of the present invention to solve the problem is a magnetic tape drive comprising a travel device for running a magnetic tape and a plurality of guides guiding the magnetic tape, which is running, along a predetermined route, and a surface hardening treatment is dispensed to a relevant guide out of the guides, whose ratio of a peripheral speed for a running speed of the magnetic tape is not more than 0.9.

In the magnetic tape drive, when the travel device runs the magnetic tape while the guides guide it along the predetermined route, the magnetic tape is regulated by flange portions of the guides in a movement of lateral directions thereof. In accordance with such the magnetic tape drive, because when the running magnetic tape is guided by the guides, the surface hardening treatment is dispensed to the relevant guide out of the guides, whose ratio of the peripheral speed for the running speed of the magnetic tape is not more than 0.9, that is, the guide where a difference between the running speed of the magnetic tape and a rotation speed of the guide is not less than the predetermined value, the flange portion of the relevant guide becomes difficult to be ground by edges of the magnetic tape. Accordingly, even when the magnetic tape drive is used over a long period, the magnetic tape is not oscillated in the lateral directions thereof.

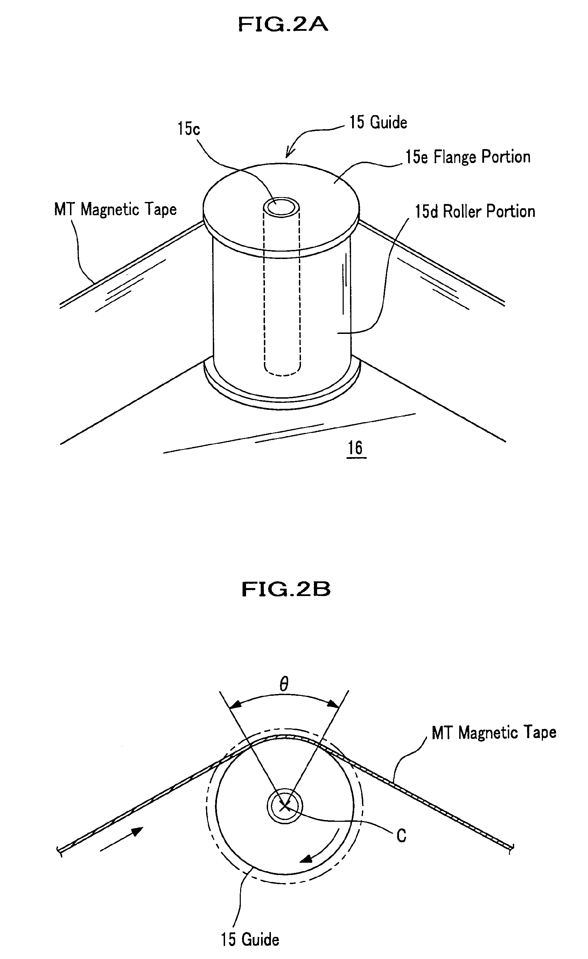

On the other hand, in accordance with knowledge of the inventor a guide, where a wrap angle of the magnetic tape is not more than 90 degrees, is remarkably bad in a rotation following ability. Meanwhile, the wrap angle described here means a range of a plane angle where the magnetic tape hung across a periphery of a guide contacts the periphery, that is, a contact angle (see FIG. 2B).

Accordingly, in such the magnetic tape drive the surface hardening treatment is preferable to be dispensed to the relevant guide out of the guides, whose ratio of the peripheral speed for the running speed of the magnetic tape is not more than 0.9 and whose wrap angle of the magnetic tape is not more than 90 degrees.

Even when the magnetic tape drive is used over a long period, it more surely suppresses an oscillation of a magnetic tape in lateral directions thereof.

### BRIEF DESCRIPTION OF THE DRAWINGS

FIG. 1 is a schematic drawing of a magnetic tape drive related to an embodiment of the present invention.
FIG. 2A is a perspective view showing a state around a guide used in the magnetic tape drive of FIG. 1; FIG. 2B is a pattern drawing showing a state where a magnetic tape contacts a guide used in the magnetic tape drive of FIG. 1.
FIG. 3 is a partial section drawing of a guide used in the magnetic tape drive of FIG. 1.
FIG. 4 is a schematic drawing showing arrangement positions in a magnetic tape drive used for an abrasion resistance test of a guide.
FIG. 5 is a pattern drawing of a guide sample provided for an observation through a laser microscope.
FIG. 6 is a microscope photo of a guide sample (example of the present invention).
FIG. 7 is a microscope photo of a guide sample (comparison example).

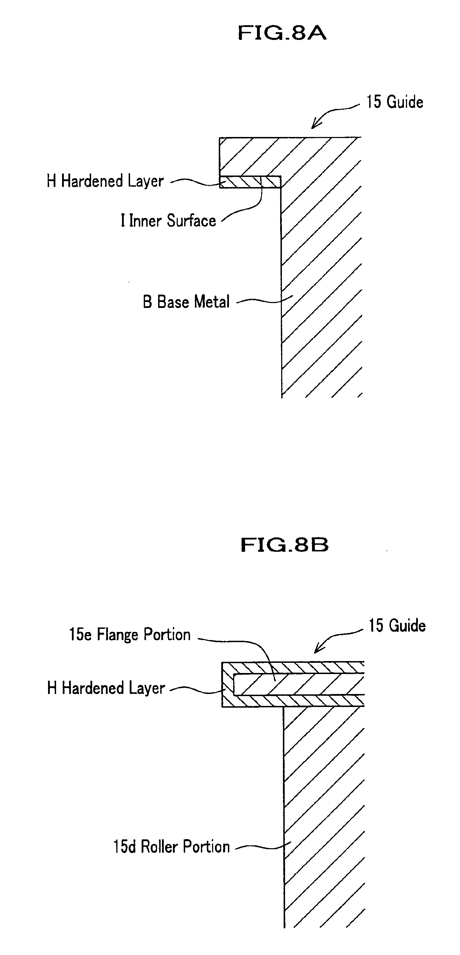

Each of FIGS. 8A and 8B is a partial section drawing of a guide used in a magnetic tape drive related to other embodiments.

FIG. 9 is a conceptual drawing showing a guide used in a conventional magnetic tape drive.

### DESCRIPTION OF THE MOST PREFERRED EMBODIMENTS

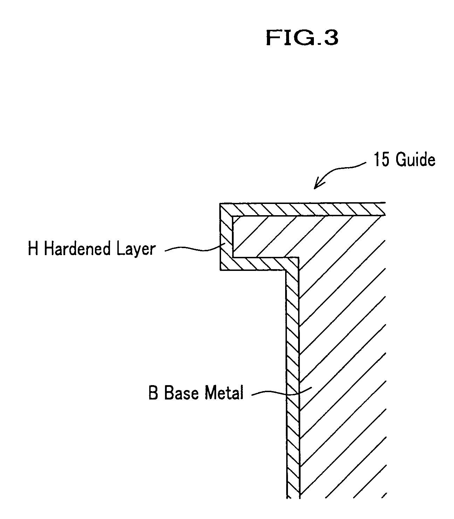

Here will be described one embodiment of the present invention related to a magnetic tape drive (hereinafter simply referred to as a "drive") in detail, referring to the drawings as needed. In referred drawings FIG. 1 is a schematic drawing of a magnetic tape drive related to an embodiment of the present invention; FIG. 2A is a perspective view showing a state around a guide used in the magnetic tape drive of FIG. 1; FIG. 2B is a pattern drawing showing a state where a magnetic tape contacts a guide used in the magnetic tape drive of FIG. 1; and FIG. 3 is a partial section drawing of a guide used in the magnetic tape drive of FIG. 1 when the guide is cut at a plane along a rotation axis thereof.

The drive exemplified in the embodiment is one according to the LTO standard (Linear Tape-Open) and is designed to record/reproduce magnetic information at a high speed even when a magnetic tape of a magnetic tape cartridge runs in any forward/reverse of bi-directions.

As shown in FIG. 1, a drive A related to the embodiment comprises a first gear 11a and a second gear 11b; a reel 12; a magnetic head 14; a first guide 15a and a second guide 15b (simply referred to as "guide 15" when not specifying a guide); drive motors not shown for driving the first gear 11a and the second gear 11b, respectively; and a casing 16 for housing the members 11a, 11b, 12, 14, 15a, and 15b.

The first gear 11a rotates a reel 17 of a magnetic tape cartridge MC loaded in the drive A and is designed to rotate in any forward/reverse of bi-directions by a drive motor not shown.

The reel 12 (hereinafter referred to as a "drive-side reel 12") winds a magnetic tape MT, which is sent out from the reel 17 (hereinafter referred to as a "cartridge-side reel 17") of the magnetic tape cartridge MC, and sends out the magnetic tape MT, which is wound, to the cartridge-side reel 17.

The second gear 11b rotates the drive-side reel 12 in a direction opposite to a rotation direction of the cartridge-side reel 17 and is designed to rotate in any forward/reverse of bi-directions of a by a drive motor not shown.

The magnetic head 14 records magnetic information on the magnetic tape MT, which reciprocates between the cartridge-side reel 17 and the drive-side reel 12, and also reproduces the recorded magnetic information. In the magnetic head 14 is used a compound head, which comprises a read element such as a magnetoresistive effect element and a write element such as an electromagnetic induction element. The magnetic head 14 is arranged so as to be able to contact the magnetic tape MT, which runs with being guided to a predetermined route by the guide 15 described next.

The first guide 15a and the second guide 15b guide the magnetic tape MT, which is sent out from the magnetic tape cartridge MC (cartridge-side reel 17), so as to head for the drive-side reel 12 via the magnetic head 14; and otherwise guide the magnetic tape MT, which is wound on the drive-side reel 12, so as to head for the cartridge-side reel 17 via the magnetic head 14. By these first guide 15a and second guide 15b is determined a running route of the magnetic tape MT in the drive A.

As obvious jointly in reference to FIG. 2A, such the guide 15 is designed to be supported by a rotation shaft 15c, which extends to a vertical direction of the casing 16, and to be able to rotate around the rotation shaft 15c. And the guide 15 is designed so that a flange portion 15e thereof regulates a movement of lateral directions of the running magnetic tape MT while the guide 15 itself rotates by the running magnetic tape MT being hung across a periphery of a roller portion 15d thereof.

In addition, as shown in FIG. 2B, the running magnetic tape MT, which is hung across such the guide 15, contacts a periphery thereof in a range of opening at a predetermined angle θ from a center C of the rotation shaft 15c. Hereinafter the contact angle is referred to as a wrap angle.

The wrap angle θ in the first guide 15a gradually becomes small as the magnetic tape MT is sent out from the cartridge-side reel 17 to the drive-side reel 12; the wrap angle θ in the second guide 15b gradually becomes small as this sent-out magnetic tape MT is wound on the drive-side reel 12. On the contrary, the wrap angle θ in the second guide 15b gradually becomes large as the magnetic tape MT is sent out from the drive-side reel 12 to the cartridge-side reel 17; the wrap angle θ in the first guide 15a gradually becomes large as this sent-out magnetic tape MT is wound on the cartridge-side reel 17. In the drive A related to the embodiment the guide 15 is arranged at positions where the wrap angle θ, which thus fluctuates when the magnetic tape MT reciprocates between the cartridge-side reel 17 and the drive-side reel 12, always becomes not more than 90 degrees. In the drive A related to the embodiment the wrap angle θ is set in such the range, and thereby the drive A is designed so that a frictional resistance of the magnetic tape MT for the first guide 15a and the second guide 15b is reduced, a high speed running of the magnetic tape MT can be made, and magnetic information for the magnetic tape MT is quickly recorded/reproduced. And in the guide 15 thus arranged a ratio of a peripheral speed of the roller portion 15d for a running speed of the magnetic tape M (hereinafter simply referred to as a "rotation following ratio of the guide 15") is designed to be not more than 0.9 when the magnetic tape MT is run by a travel device.

As shown in FIG. 3, in such the guide 15 a hardening treatment is dispensed to a surface of a base metal B and a hardened layer H is formed on the surface. Meanwhile, although in FIG. 3 the base metal B and the hardened layer H are clearly discriminatingly depicted, an interface thereof is not always clear, depending on a material of the hardened layer H.

In the hardened layer H a hardening treatment such as a soft-nitrizing treatment, carburizing and quenching, and induction hardening is dispensed to the base metal B or a hard film is formed on the surface of the base metal B, for example, by a known thin-film-forming method such as a sputtering method.

The material of the hardened layer H is not specifically limited, and for example, are cited titan nitride (TiN), chromium nitride (CrN), titan aluminum nitride (TiAlN), tungsten carbide-cobalt (WC-Co), diamond-like carbon (DLC), and the like. Meanwhile, in the hardened layer H, which is formed on the base metal B, a polish treatment may also be dispensed so that a surface thereof becomes a predetermined smoothness.

Next, will be described operation of the drive A related to the embodiment, referring to FIGS. 1, 2A, 2B, and 3 as needed.

First, the magnetic tape cartridge MC is loaded in the drive A and the first gear 11a and the second gear11b are rotated by drive motors not shown, and thereby the magnetic tape MT wound on the cartridge-side reel 17 is sent out to the drive-side reel 12; This sent-out magnetic tape MT is wound to the drive-side reel 12 and thereby runs between the cartridge-side reel 17 and the drive-side reel 12.

Then the first guide 15a and the second guide 15b guide the running magnetic tape MT so as to contact the magnetic head 14. Because at this time each wrap angle θ of the first guide 15a and the second guide 15b is set to become a range of not more than 90 degrees, a frictional resistance of the magnetic tape MT for the guide 15 is reduced. As a result, because the magnetic tape MT can be stably run at a high speed, magnetic information can be recorded/reproduced at a high speed for the magnetic tape MT. On the contrary, because in the first guide 15a and the second guide 15b the wrap angle θ is set in a range of not more than 90 degrees and a contact area of the guide 15 and the magnetic tape MT is reduced, the rotation following ratio of the guide 15 becomes not more than 0.9. That is, a difference occurs between a running speed of the magnetic tape MT and a peripheral speed of the guide 15.

On the other hand, because the surface hardening treatment is dispensed to the first guide 15a and the second guide 15b, the flange portion 15e thereof becomes difficult to be ground. In other words, even when the drive A is used over a long period, the magnetic tape MT is not oscillated in the lateral directions thereof. Accordingly, the drive A does not generate a tracking error, not depending on recoding density of the magnetic tape MT loaded therein being high or low, and can be used for an inspection of the magnetic tape MT and a library over a long period.

Next, because an abrasion resistance test of a guide used in a drive of the present invention was performed, a test result thereof will be discussed.

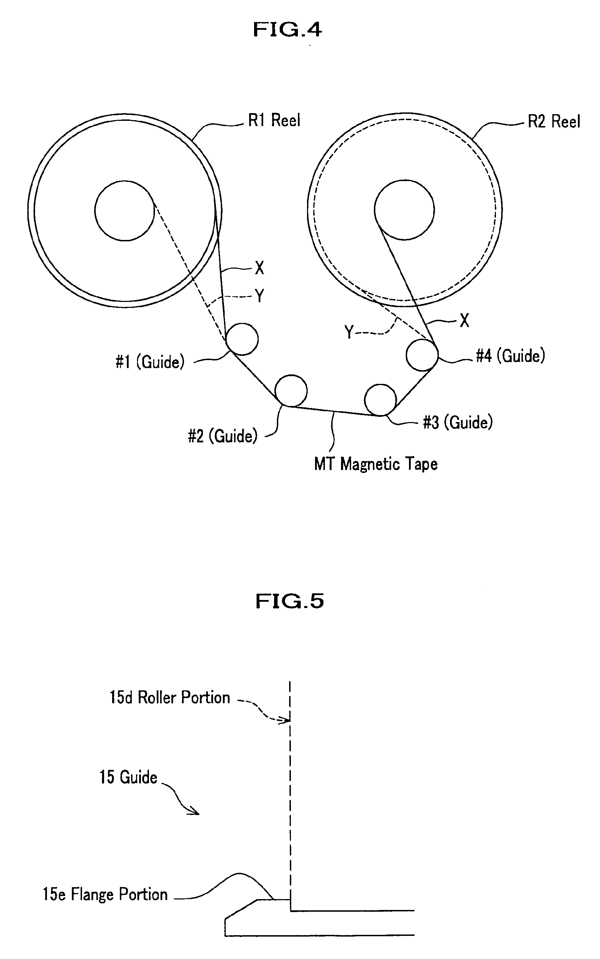

The drive used in the abrasion resistance test is, as shown in FIG. 4, designed so that the magnetic tape MT, which runs between a pair of reels R1 and R2, is guided along a predetermined route by guides arranged at positions #1, #2, #3, and #4. And out of these guides, on peripheries of guides arranged at the positions#2 and #3 a groove not shown is formed and adjusts a running speed of the magnetic tape MT and peripheral speeds of rotating guides so as to become nearly equal, that is, each the rotation following ratio of the guides approximates 1. In addition, as a guide arranged at the position #1, is used a stainless steel guide, where a hardened layer of titan nitride (TiN) is formed on a surface thereof.

In the abrasion resistance test, firstly setting a tension 1N and running the magnetic tape MT at 6 meters per second, measure a rotation speed of each guide. And here make a direction of sending the magnetic tape MT from the reel R1 to the reel R2 a forward direction and a reverse thereof a reverse direction, measure the rotation speed of each guide when running the magnetic tape MT in the forward and reverse directions. The result is shown in Table 1. Meanwhile, a rotation speed, which is described in a column of "Start-Side Speed" in Table 1, is that of each guide when starting to send the magnetic tape MT from the reel R1, that is, when the magnetic tape MT is at a position X in FIG. 4. On the other hand, a rotation speed, which is described in a column of "Finish-Side Speed" in Table 1, is that of each guide when finishing to send the magnetic tape MT from the reel R1, that is, when the magnetic tape MT is at a position Y in FIG. 4.

**Table 1**

| Rotation Speed of Guide (rotation per second): The Present Invention | | | | |
|---|---|---|---|---|
| Guide No. | Forward Direction | | Reverse Direction | |
| | Start-Side Speed | Finish-Side Speed | Start-Side Speed | Finish-Side Speed |
| #1 | 78 | 16 | 21 | 17 |
| #2 | 164 | 164 | 164 | 164 |
| #3 | 165 | 164 | 165 | 164 |
| #4 | 48 | 40 | 87 | 164 |

As obvious from Table 1, it turns out that the guide arranged at the position #1 is far lower than 0.9 in the rotation following ratio thereof.

Next, run a commercial new magnetic tape in such the drive in the forward and reverse directions, respectively. And observe an abrasion state of a guide arranged at the position #1 by a laser microscope after running the magnetic tape MT by 12,000 meters. Meanwhile, as shown in FIG. 5, a sample provided for this observation (hereinafter referred to as a "guide sample") is something that is cut out from the guide 15 with leaving the flange portion 15e.

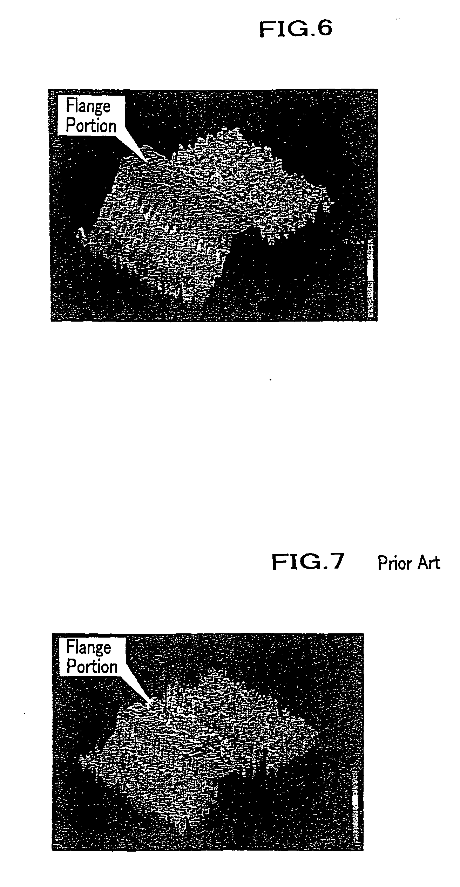

FIG. 6 is a microscope photo of a #1 guide sample when running the magnetic tape MT.

As obvious from FIG. 6, it turns out that in the guide 15, which is used for a magnetic tape drive of the present invention, the flange portion 15e is not abraded away even when the guide 15 is arranged at a position where the rotation following ratio is far lower than 0.9.

Next, as a comparison example, measure a rotation speed of each guide for a conventional stainless steel guide same as described above when running the magnetic tape MT. The result is shown in Table 2.

**Table 2**

| Rotation Speed of Guide (rotation per second): Comparison Example | | | | |
|---|---|---|---|---|
| Guide No. | Forward Direction | | Reverse Direction | |
| | Start-Side Speed | Finish-Side Speed | Start-Side Speed | Finish-Side Speed |
| #1 | 74 | 20 | 20 | 17 |
| #2 | 165 | 165 | 165 | 165 |
| #3 | 164 | 164 | 164 | 164 |
| #4 | 66 | 57 | 93 | 163 |

As obvious from Table 2, it turns out that the guide arranged at the position #1 is far lower than 0.9 in the rotation following ratio thereof.

In addition, for the conventional stainless steel guide same as described above, observe an abrasion state of a guide arranged at the position #1 by a laser microscope. FIG. 7 is a microscope photo of a #1 guide sample when running the magnetic tape MT.

As obvious from FIG. 7, in a flange portion used for a conventional magnetic tape drive, it turns out that a portion receiving the magnetic tape MT, which is running, is remarkably abraded away.

As obvious from the abrasion resistance tests thus described, because if a guide used for the drive of the present invention is arranged at a position where the rotation following ratio is lower than 0.9, the flange portion 15e (see FIG. 2A) is not abraded away, the magnetic tape MT guided by the guide 15 is not oscillated in the lateral directions thereof.

Thus, although the drive of the present invention is concretely described, based on the embodiment, the invention is not at all limited to such the embodiment and various variations are available without departing from the spirit and scope of the invention.

For example, although as the first guide 15a and the second guide 15b are applied ones where a hardening treatment is dispensed to all surfaces thereof, the present invention is not limited thereto; for example, as shown in FIG. 8A, are available the first guide 15a and the second guide 15b, where the hardened layer H is formed on nothing but an inner surface I of the flange portion 15e arising from a periphery thereof.

In addition, as shown in FIG. 8B, in the first guide 15a and the second guide 15b the roller portion 15d and the flange portion 15e is configured of different members and the flange portion 15e, where a surface hardening treatment is dispensed, may be joined to the roller portion 15d.

Furthermore, although in the embodiment the drive according to the LTO standard, that is, a single-reel cartridge drive is exemplified, the present invention is not limited thereto and a two-reel cartridge drive is also available.

Still furthermore, a guide used for the magnetic tape drive of the present invention is applicable to one arranged within a magnetic tape cartridge.

## Claims

1. A magnetic tape drive (A) comprising:
a travel device (11a, 11b, and 12) for running a magnetic tape (MT); and
a plurality of guides (15) for guiding said magnetic tape, which is running, along a predetermined route,
wherein each of said guides comprises a roller portion (15d) and a flange portion (15e),
wherein a surface hardening treatment is dispensed to a guide out of said guides, and
wherein a ratio of a peripheral speed of the guide for a running speed of said magnetic tape is not more than 0.9.

2. A magnetic tape drive according to claim 1, wherein a wrap angle of said magnetic tape is not more than 90 degrees in a guide, and wherein said ratio of a peripheral speed of the guide is not more than 0.9.

3. A magnetic tape drive according to claim 1, wherein a surface hardening treatment is dispensed to all surface of each of said guides.

4. A magnetic tape drive according to claim 2, wherein a surface hardening treatment is dispensed to all surface of each of said guides.

5. A magnetic tape drive according to claim 1, wherein a surface hardening treatment is dispensed to nothing but an inner surface (I) of a flange portion arising from a periphery of a roller portion of each of said guides.

6. A magnetic tape drive according to claim 2, wherein a surface hardening treatment is dispensed to nothing but an inner surface of a flange portion arising from a periphery of a roller portion of each of said guides.

7. A magnetic tape drive according to claim 1, wherein a roller portion and flange portion of each of said guides is configured of different members and said flange portion is joined to said roller portion, and wherein a surface hardening treatment is dispensed to the flange portion.

8. A magnetic tape drive according to claim 2, wherein a roller portion and flange portion of each of said guides is configured of different members and said flange portion is joined to said roller portion, and wherein a surface hardening treatment is dispensed to the flange portion.

9. A magnetic tape drive according to claim 1, wherein a material of a hardened layer (H) formed on said guides by said surface hardening treatment is any of titan nitride, chromium nitride, titan aluminum nitride, tungsten carbide-cobalt, and diamond-like carbon.

10. A magnetic tape drive according to claim 2, wherein a material of a hardened layer formed on said guides by said surface hardening treatment is any of titan nitride, chromium nitride, titan aluminum nitride, tungsten carbide-cobalt, and diamond-like carbon.

11. A magnetic tape drive according to claim 3, wherein a material of a hardened layer formed on said guides by said surface hardening treatment is any of titan nitride, chromium nitride, titan aluminum nitride, tungsten carbide-cobalt, and diamond-like carbon.

12. A magnetic tape drive according to claim 4, wherein a material of a hardened layer formed on said guides by said surface hardening treatment is any of titan nitride, chromium nitride, titan aluminum nitride, tungsten carbide-cobalt, and diamond-like carbon.

13. A magnetic tape drive according to claim 5, wherein a material of a hardened layer formed on said guides by said surface hardening treatment is any of titan nitride, chromium nitride, titan aluminum nitride, tungsten carbide-cobalt, and diamond-like carbon.

14. A magnetic tape drive according to claim 6, wherein a material of a hardened layer formed on said guides by said surface hardening treatment is any of titan nitride, chromium nitride, titan aluminum nitride, tungsten carbide-cobalt, and diamond-like carbon.

15. A magnetic tape drive according to claim 7, wherein a material of a hardened layer formed on said guides by said surface hardening treatment is any of titan nitride, chromium nitride, titan aluminum nitride, tungsten carbide-cobalt, and diamond-like carbon.

16. A magnetic tape drive according to claim 8, wherein a material of a hardened layer formed on said guides by said surface hardening treatment is any of titan nitride, chromium nitride, titan aluminum nitride, tungsten carbide-cobalt, and diamond-like carbon.
